# EUROPEAN PATENT SPECIFICATION

(11) **EP 4 184 952 B1**
(45) Date of publication and mention of the grant of the patent: **12.11.2025**
(21) Application number: 21853592.0
(22) Date of filing: 18.05.2021
(51) Int. Cl.: H04W 4/02

(54) **POSITIONING METHOD AND COMMUNICATION APPARATUS**
POSITIONIERUNGSVERFAHREN UND KOMMUNIKATIONSVORRICHTUNG
PROCÉDÉ DE POSITIONNEMENT ET APPAREIL DE COMMUNICATION

(30) Priority: 07.08.2020 CN 202010790577
(43) Date of publication of application: 24.05.2023
(73) Proprietor: Huawei Technologies Co., Ltd., Shenzhen, Guangdong 518129 (CN)
(72) Inventor: HAO, Jinping, Shenzhen, Guangdong 518129 (CN)
(74) Representative: Thun, Clemens
(86) International application number: PCT/CN2021/094283
(87) International publication number: WO 2022/028034

(56) References cited:
- WO-A1-2019/153215
- WO-A1-2019/153231
- CN-A- 111 343 567
- CN-A- 111 448 834
- US-A1- 2010 323 718
- US-A1- 2020 084 569
- US-A1- 2020 229 130
- HUAWEI, HISILICON: "Considerations on downlink-only positioning method in NR", 3GPP DRAFT; R2-1913037 CONSIDERATION ON DL POSITIONING METHOD IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, CZ; 20190826 - 20190830, 3 October 2019 (2019-10-03), Mobile Competence Centre ; 650, route des Lucioles ; F-06921 Sophia-Antipolis Cedex ; France , XP051804081
- QUALCOMM INCORPORATED: "Comparison of 5GC-LMF and RAN-LMC based Positioning", 3GPP DRAFT; R3-195824_(LOCAL LMF BENEFITS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Chongqing, China; 20191014 - 20191018, 4 October 2019 (2019-10-04), Mobile Competence Centre ; 650, route des Lucioles ; F-06921 Sophia-Antipolis Cedex ; France , XP051810037

## Description

### TECHNICAL FIELD

This application relates to the field of communication technologies, and in particular, to a positioning method and a communication apparatus.

### BACKGROUND

In an existing positioning procedure, a location management function (location management function, LMF) network element initiates a measurement request to a terminal by using a long term evolution positioning protocol (long term evolution positioning protocol, LPP) message, the terminal measures a plurality of positioning reference signals based on the measurement request, to obtain a measurement result, and the terminal sends the measurement result to the LMF by using the LPP message.

The LPP message is based on a radio resource control (radio resource control, RRC) connection set up between the terminal and a base station. In other words, the terminal is in an RRC non-connected state, and terminal positioning cannot be implemented. Currently, there is an urgent need to provide a method to position the terminal when the terminal is in various RRC states.

The document WO 2019/153231 A1 shows a system and method for increasing mobile device positioning accuracy. Especially, a network side device transmits to a mobile device information as of how to measure a position. The terminal then performs this measurement, and reports the results to the network side device.

The document US 2020/229130 A1 discloses positioning requests and PRS measurement reporting between a base station and a terminal. However, the assistance data is only retrievable by the terminal from a remote server when the terminal is in the RRC connected state and it is then stored at the terminal to be used when a positioning request is received from the base station.

### SUMMARY

The present invention is defined by the independent claims. Further advantageous developments are shown by the dependent claims.

This application provides a positioning method and a communication apparatus, to position a terminal when the terminal is in various RRC states.

According to this solution, the positioning management function network element communicates with the first base station, and the first base station communicates with the terminal. When the terminal is in various RRC states, the positioning management function network element may request, through the first base station, the terminal to measure the positioning reference signal.

### BRIEF DESCRIPTION OF DRAWINGS

FIG. 1 is a schematic diagram of a positioning architecture according to this application;
FIG. 2 is a schematic diagram of a protocol stack related to interaction between an LMF and a terminal according to this application;
FIG. 3 is a schematic flowchart of a positioning method;
FIG. 4 is a schematic diagram of an OTDOA-based downlink positioning method according to this application;
FIG. 5 is a schematic flowchart of another positioning method according to this application;
FIG. 6 is a schematic flowchart of exchanging a configuration update message between neighboring base stations according to this application;
FIG. 7 is a schematic diagram of a structure of a communication apparatus according to this application; and
FIG. 8 is a schematic diagram of a structure of another communication apparatus according to this application.

### DESCRIPTION OF EMBODIMENTS

The following describes in detail embodiments of this application with reference to accompanying drawings.
(1) A terminal device in embodiments of this application, which may also be referred to as a terminal, is an entity configured to receive or transmit a signal on a user side, and is configured to send an uplink signal to a network device or receive a downlink signal from a network device. The terminal device includes a device that provides a user with voice and/or data connectivity, for example, may include a handheld device having a wireless connection function or a processing device connected to a wireless modem. The terminal device may communicate with a core network through a radio access network (radio access network, RAN), and exchange a voice and/or data with the RAN. The terminal device may include user equipment (user equipment, UE), a V2X terminal device, a wireless terminal device, a mobile terminal device, a device-to-device (device-to-device, D2D) communication terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a wearable device, a vehicle-mounted device, or the like.

By way of example, and not limitation, the terminal device in embodiments of this application may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the various terminal devices described above are located in a vehicle (for example, placed in the vehicle or mounted in the vehicle), the terminal devices may be considered as vehicle-mounted terminal devices. For example, the vehicle-mounted terminal devices are also referred to as on-board units (on-board units, OBUs).

(2) A core network in embodiments of this application may include a network device that processes and forwards signaling and data of a user, for example, include a core network device such as an access and mobility management function (access and mobility management function, AMF), a session management function (session management function, SMF), and a user plane gateway. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane function (user plane function, UPF), is generally located on a network side. The AMF and the SMF are equivalent to a mobility management entity (mobility management entity, MME) in an LTE system. The AMF is mainly responsible for admission, and the SMF is mainly responsible for session management. Certainly, the core network may also include other network elements, which are not listed one by one herein.

(3) A next generation radio access network (next generation radio access network, NG-RAN) in embodiments of this application may include one or more access network devices. The access network device in the NG-RAN may also be referred to as a base station, a RAN node, or a RAN device. The access network device is a network-side entity configured to transmit and/or receive a signal, and serve as a router between the terminal and a remaining part of the core network, where the remaining part of the core network may include an IP network and the like. The access network device may further coordinate attribute management of an air interface. For example, the access network device may be an evolved NodeB (evolved NodeB, eNB or e-NodeB) in LTE. The eNB is an apparatus, deployed in a radio access network, that meets a 4G standard and provides a wireless communication function for the terminal. The access network device may alternatively be a new radio controller (new radio controller, NR controller), a gNodeB (gNB) in a 5G system, a central unit (central unit), a new radio base station, a radio remote module, a micro base station (also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), any other radio access device, or a base station in next generation communication. However, embodiments of this application are not limited thereto.

(4) The terms "system" and "network" may be interchangeably used in embodiments of this application. The term "a plurality of" means two or more than two. The term "and/or" describes an association relationship for describing associated objects and represents that three relationships may exist. For example, A and/or B may represent the following three cases: Only A exists, both A and B exist, and only B exists. In addition, the character "/", unless otherwise specified, usually represents an "or" relationship between the associated objects.

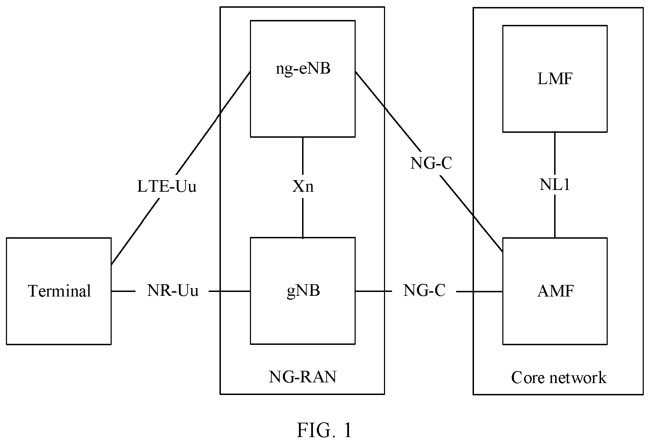

FIG. 1 is a schematic diagram of an example of a positioning architecture. As shown in FIG. 1, related network elements/modules mainly include three parts: an NG-RAN, a terminal, and a core network.

The core network includes an LMF and an AMF. A positioning server, namely, the LMF, is connected to the AMF, and the LMF and the AMF are connected through an NL1 interface. The LMF is responsible for supporting different types of location services related to the terminal, including positioning the terminal and transferring assistance data to the terminal. The AMF may receive a location services request related to the terminal from a 5th generation core network location services (5th generation core network location services, 5GC LCS) entity, or the AMF may start some location services on behalf of a specific terminal, and forward the location services request to the LMF. The AMF obtains location information returned by the terminal and returns the location information to the 5GC LCS entity.

The NG-RAN may include a gNB, a next generation evolved NodeB (next generation evolved NodeB, ng-eNB), and the like. The gNB and the ng-eNB are connected through an Xn interface, and the AMF and the ng-eNB/gNB are connected through an NG-C interface.

The terminal may measure a downlink signal from the NG-RAN to support positioning. The gNB/ng-eNB may provide positioning measurement information for the terminal, and transfer the positioning measurement information to the terminal.

Information exchange that may be performed between the LMF and the terminal includes the following types: (1) exchanging information between the LMF and the ng-eNB/gNB by using an NR positioning protocol a (NR positioning protocol a, NRPPa) message, for example, obtaining configuration information of a positioning reference signal (positioning reference signal, PRS) and a sounding reference signal (sounding reference signal, SRS), cell timing, and cell location information, and (2) transferring terminal capability information, assistance information, positioning measurement information, and the like between the LMF and the terminal by using an LTE positioning protocol (LTE positioning protocol, LPP) message.

It should be noted that embodiments of this application are not limited to the system architecture shown in FIG. 1, and may be further applied to another future communication system, for example, a 6th generation (6th generation, 6G) communication system architecture. In addition, in a future communication system, a function of a network element in this application may remain the same while a name of the network element may change.

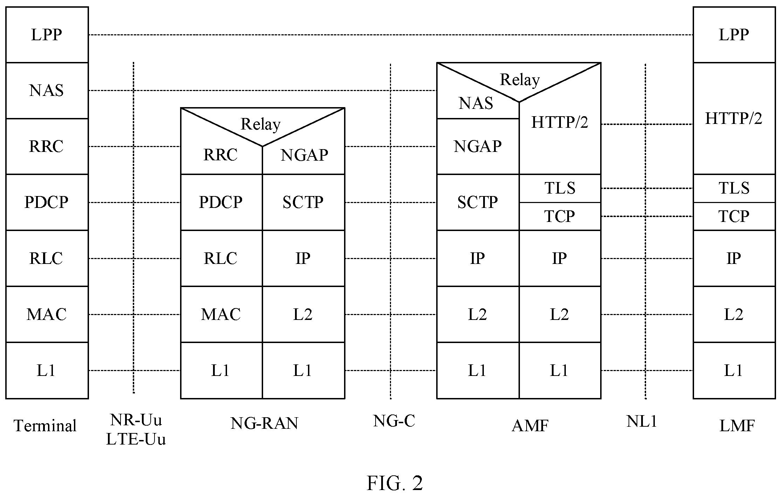

FIG. 2 is a schematic diagram of a protocol stack related to interaction between an LMF and a terminal. As shown in FIG. 2, the terminal and an NG-RAN are connected through an NR-Uu interface or an LTE-Uu interface. Protocol stacks used for interaction with the NG-RAN on a terminal side include: an LPP, a non-access stratum (non-access stratum, NAS), an RRC layer, a packet data convergence protocol (packet data convergence protocol, PDCP) layer, a radio link control (radio link control, RLC) layer, a medium access control (medium access control, MAC) layer, and a layer (layer, L) 1 from top to bottom. Protocol stacks used for interaction with the terminal on an NG-RAN side include: an RRC layer, a PDCP layer, an RLC layer, a MAC layer, and an L1 from top to bottom. The NG-RAN and an AMF are connected through an NG-C interface. Protocol stacks used for interaction with the AMF on an NG-RAN side include: an NG application protocol (NG application protocol, NGAP), a stream control transmission protocol (stream control transmission protocol, SCTP), an internet protocol (internet protocol, IP), an L2, and an L1 from top to bottom. Protocol stacks used for interaction with the NG-RAN on an AMF side include: a NAS, an NGAP, an SCTP, an IP, an L2, and an L1 from top to bottom. The AMF and the LMF are connected through an NL1 interface. Protocol stacks used for interaction with the LMF on an AMF side include: the hyper text transfer protocol 2.0 (hyper text transfer protocol, HTTP 2.0), a transport layer security (transport layer security, TLS) layer, a transmission control protocol (transmission control protocol, TCP), an IP, an L2, and an L1 from top to bottom. Protocol stacks used for interaction with the AMF on an LMF side include: an LPP, the HTTP 2.0, a TLS layer, a TCP, an IP, an L2 layer, and an L1 from top to bottom.

Information exchanged between the LMF and the terminal may be carried in an LPP message. The LPP message is sent over the Uu interface, the NG-C interface, and the NL1 interface. On the terminal side, the LPP message is encapsulated into NAS signaling. After receiving the NAS signaling from the terminal, a base station forwards the NAS signaling to the AMF. The AMF parses the NAS signaling to obtain the LPP message and sends the LPP message to the LMF. Similarly, the LPP message sent from the LMF side is encapsulated into NAS signaling and sent to the base station. After receiving the NAS signaling, the base station directly forwards the NAS signaling to the terminal. Information exchanged between the LMF and the base station is carried in an NRPPa message and sent over the NG-C interface.

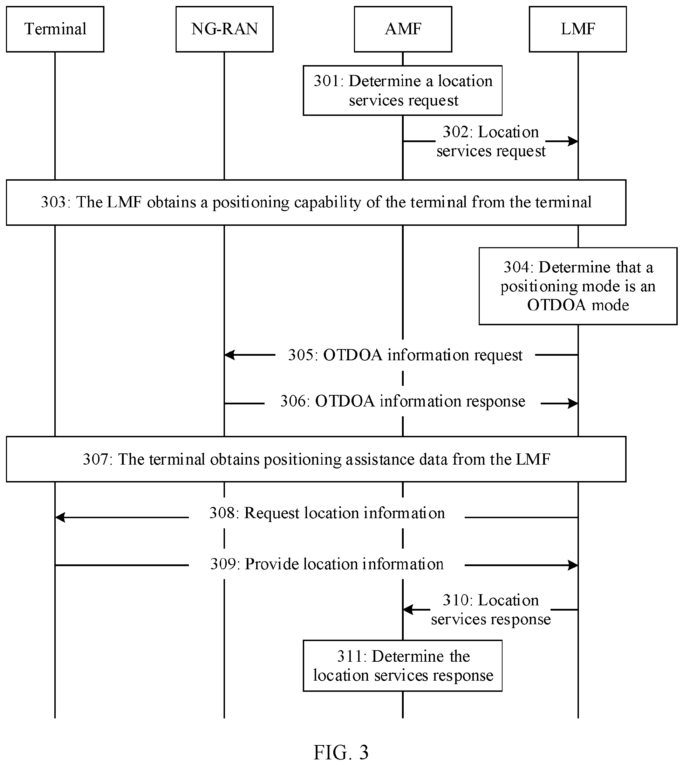

NR defines a plurality of downlink positioning technologies, for example, an angle of departure (angle of departure, AoD)-based downlink positioning technology, an observed time difference of arrival (observed time difference of arrival, OTDOA)-based downlink positioning technology, and the like. Based on the positioning architecture shown in FIG. 1, FIG. 3 is a flowchart of an example of an OTDOA-based downlink positioning method. The OTDOA-based downlink positioning method includes the following steps.

Step 301: An AMF determines a location services request (location services request, LCS request).

The AMF may obtain the location services request of a 5GC LCS, or the AMF needs to obtain location information of a terminal due to some reasons (for example, an emergency call), and determine the location services request.

Step 302: The AMF sends the location services request to an LMF.

Step 303: The LMF obtains a positioning capability of the terminal from the terminal.

Step 304: The LMF determines that a positioning mode is an OTDOA mode.

Step 305: The LMF sends an OTDOA information request (OTDOA information request) to an NG-RAN.

Step 306: The NG-RAN sends an OTDOA information response (OTDOA information response) to the LMF.

Step 307: The terminal obtains positioning assistance data (assistance data) from the LMF.

The positioning assistance data may include configuration information of a positioning reference signal sent by a cell.

Step 308: The LMF sends a message "request location information (request location information)" to the terminal.

The message "request location information" may include positioning measurement information, and the positioning measurement information includes, for example, a to-be-measured measurement quantity and a measurement configuration parameter.

Step 309: The terminal sends a message "provide location information (provide location information)" to the LMF.

The terminal may measure, based on the positioning measurement information and the positioning assistance data, the positioning reference signal sent by a base station, to obtain a measurement result, and send the message "provide location information" to the LMF.

Step 310: The LMF sends a location services response (location services response, LCS response) to the AMF.

The LMF obtains the location information of the terminal through calculation based on the measurement result of the terminal, and sends the location information of the terminal to the AMF in the location services response.

Step 311: The AMF determines the location services response.

The AMF sends the location information of the terminal to the 5GC LCS, or uses the location information of the terminal for an emergency call and the like.

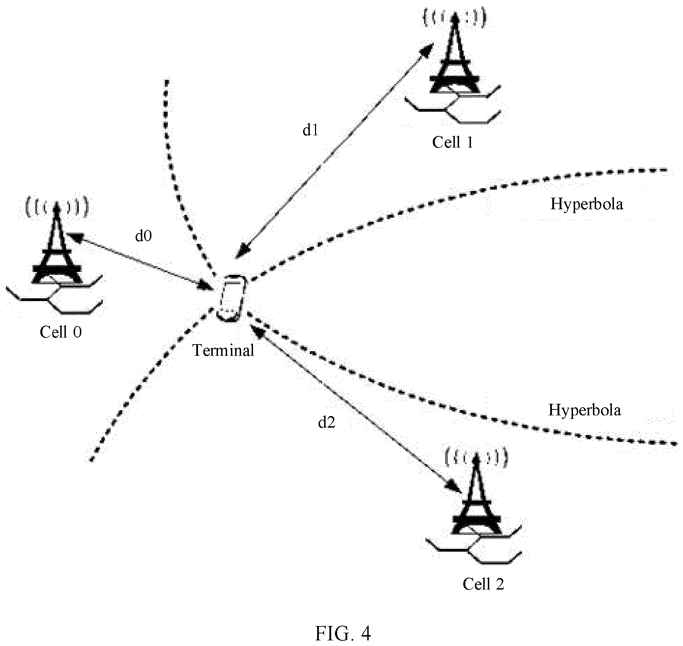

With reference to FIG. 4, a method for determining the location information of the terminal based on an OTDOA technology is described as an example. For example, the terminal detects a time difference of arrival of positioning reference signals in three cells, one hyperbola positioning area is determined for every two cells (where a difference d0-d1 between distances from the terminal to a cell 0 and a cell 1 forms a hyperbola, and a difference d0-d2 between distances from the terminal to the cell 0 and a cell 2 forms another hyperbola). An intersection point is determined by using two hyperbolas, and an additional condition (for example, geographical location information of a cell) is applied to obtain accurate location information of the terminal.

In a current terminal positioning technology, the LMF sends a measurement request to the terminal by using an LPP message, to indicate the terminal to measure a positioning reference signal. Prerequisites for the LMF to transmit the LPP message to the terminal is that there is an RRC connection between the terminal and a base station and there is an NRPPa connection between the base station and the LMF. In other words, provided that there is no RRC connection between the terminal and the base station, or that the terminal is in an RRC non-connected state, terminal positioning cannot be implemented.

Based on this, this application provides a positioning method, to position the terminal when the terminal is in various RRC states.

For ease of description, in this application, the LMF is subsequently used to represent a positioning management function network element. In this application, there may be three RRC states of the terminal: an RRC connected state, an RRC inactive state, and an RRC idle state respectively. The RRC inactive state and the RRC idle state may also be collectively referred to as an RRC non-connected state.

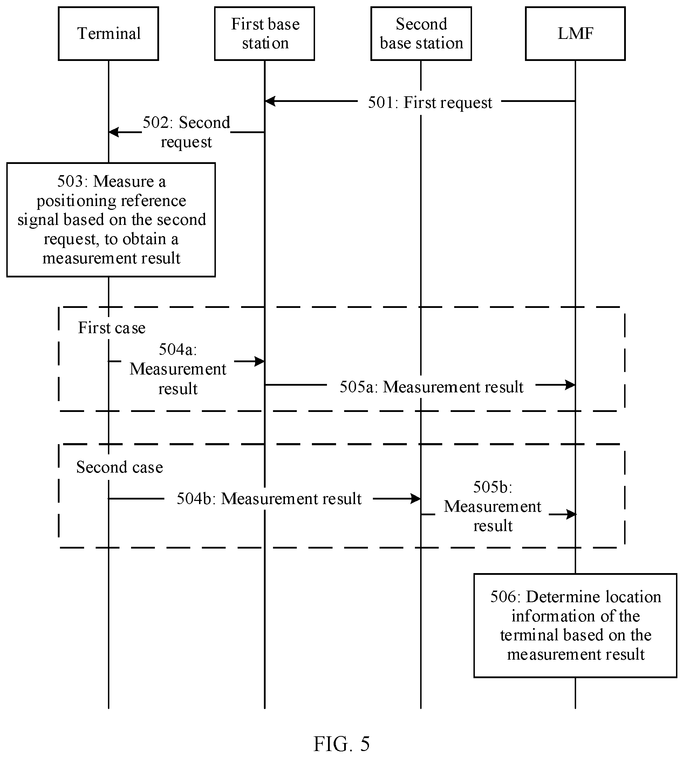

FIG. 5 is a flowchart of a positioning method according to this application. With reference to the flowchart in FIG. 5, the method is described as follows:
Step 501: An LMF sends a first request to a first base station.

Correspondingly, the first base station receives the first request from the LMF.

In step 501, a terminal may be in an RRC connected state or an RRC inactive state. Specifically, if the terminal is in the RRC connected state, the first base station may be a serving base station (serving gNB) of the terminal. If the terminal is in the RRC inactive state, the first base station may be a last serving base station (last serving gNB) of the terminal.

The first request is used to request the terminal to measure a positioning reference signal, or the first request is used to request to obtain a measurement result of measuring the positioning reference signal by the terminal. It should be understood that the first request indicates the first base station to indicate (or configure) the terminal to measure the positioning reference signal, and the terminal measures the positioning reference signal based on the indication (or configuration) of the first base station, to obtain the measurement result.

The first request includes a to-be-measured measurement quantity and a measurement configuration parameter.

The to-be-measured measurement quantity is used to indicate a measurement parameter used when the terminal measures the positioning reference signal, and the to-be-measured measurement quantity includes at least one or more of an angle of arrival (angle of arrival, AoA), a reference signal time difference (reference signal time difference, RSTD), or a receiving transmitting time difference (Rx-Tx time difference). For example, the to-be-measured measurement quantity includes the angle of arrival, and indicates the terminal to measure an angle of arrival of the positioning reference signal. The to-be-measured measurement quantity may be referred to as a to-be-measured parameter.

The measurement configuration parameter is used to indicate the terminal to measure a measurement configuration of the positioning reference signal. The measurement configuration parameter includes at least one or more of a measurement periodicity, a quantity of measurement times, whether periodic reporting is performed, a reporting periodicity, or a measurement identifier. For example, the measurement configuration parameter includes the measurement periodicity and the quantity of measurement times, and indicates the terminal to measure the positioning reference signal based on the measurement periodicity and the quantity of measurement times.

In this application, the terminal indicated by the first request is a target terminal. In other words, the LMF indicates, by using the first request, the terminal that needs to perform downlink positioning measurement. The first request may explicitly or implicitly indicate the terminal, and the first base station determines, based on the first request, the terminal indicated by the LMF. For example, the first request explicitly indicates the terminal. For example, the first request carries a terminal identifier (for example, a globally unique temporary identity (globally unique temporary identity, GUTI)). The first request implicitly indicates the terminal. For example, the first request is carried in an NGAP message associated with the terminal, and the NGAP message is, for example, a downlink UE associated NRPPa transport (downlink UE associated NRPPa transport) message.

The first request may further indicate an RRC state when the terminal measures the positioning reference signal. The RRC state when the terminal measures the positioning reference signal may include an RRC connected state and an RRC non-connected state.

In a first possible implementation, the first request may indicate only the terminal to measure the positioning reference signal in the RRC non-connected state. Specifically, if the first request carries first indication information, it means that the first request indicates that the terminal is in the RRC non-connected state when measuring the positioning reference signal. If the first request does not carry first indication information, it means that the first request does not indicate the RRC state when the terminal measures the positioning reference signal. This is equivalent to that the terminal may measure the positioning reference signal in any RRC state.

In a second possible implementation, the first request may indicate the terminal to measure the positioning reference signal in the RRC non-connected state or in the RRC connected state. Specifically, in a first example, if the first request carries first indication information, it means that the first request indicates that the terminal is in the RRC non-connected state when measuring the positioning reference signal. If the first request does not carry first indication information, it means that the first request indicates that the terminal is in the RRC connected state when measuring the positioning reference signal.

In a second example, first indication information may occupy one bit in the first request. If a value of the bit is 1, it means that the first request indicates that the terminal is in the RRC non-connected state when measuring the positioning reference signal. If a value of the bit is 0, it means that the first request indicates that the terminal is in the RRC connected state when measuring the positioning reference signal.

In the first example of the first possible implementation or the second possible implementation, the first indication information may be indication information of an enumeration type, and a value of the first indication information may be "idle" or "inactive". Specifically, if the value of the first indication information is "idle", it indicates that the first request indicates the terminal to measure the positioning reference signal in the RRC idle state; or if the value of the first indication information is "inactive", it indicates that the first request indicates the terminal to measure the positioning reference signal in the RRC inactive state.

This application further provides a third possible implementation. The first request may indicate the terminal to measure the positioning reference signal in the RRC inactive state, the RRC idle state, or the RRC connected state. Specifically, the first request carries first indication information, and a value of the first indication information is "idle", "inactive", or "connected". If the value of the first indication information is "idle", it indicates that the first request indicates the terminal to measure the positioning reference signal in the RRC idle state; if the value of the first indication information is "inactive", it indicates that the first request indicates the terminal to measure the positioning reference signal in the RRC inactive state, or if the value of the first indication information is "connected", it indicates that the first request indicates the terminal to measure the positioning reference signal in the RRC connected state.

In this application, the first request may further include positioning assistance information, where the positioning assistance information is used to indicate a first cell and configuration information of a positioning reference signal transmitted by the first cell.

The first cell may be understood as a cell that sends the positioning reference signal to the terminal, and the first cell may be controlled by the first base station or another base station. The first cell may be one or more cells determined by the LMF. For example, the LMF determines one or more cells as the first cell based on a previous location of the terminal. Certainly, another manner may alternatively be used. This is not limited in this application.

The configuration information of the positioning reference signal transmitted by the first cell may be specifically at least one of a resource identifier (PRS resource ID), a time-frequency resource configuration, a transmission periodicity, a quantity of symbols of the positioning reference signal transmitted by the first cell.

In an optional design, the positioning assistance information includes identifiers of a plurality of first cells and configuration information of a positioning reference signal transmitted by each of the plurality of first cells. For example, if a cell 0, a cell 1, and a cell 2 are all first cells, the positioning assistance information may include an identifier of the cell 0 and configuration information of a positioning reference signal transmitted by the cell 0, an identifier of the cell 1 and configuration information of a positioning reference signal transmitted by the cell 1, and an identifier of the cell 2 and configuration information of a positioning reference signal transmitted by the cell 2. The terminal determines, based on the positioning assistance information, a specific time-frequency resource on which the positioning reference signal is received and a specific first cell that the positioning reference signal is from, and reports a corresponding measurement result.

The identifier of the first cell may be at least one of a cell identifier, a transmission reception point (transmission reception point, TRP) identifier, a positioning reference signal identifier. For example, the positioning assistance information includes positioning reference signal identifiers of a plurality of first cells and configuration information of a positioning reference signal transmitted by each of the plurality of first cells.

In another optional design, the positioning assistance information includes configuration information of a positioning reference signal transmitted by each of a plurality of first cells. For example, if a cell 0, a cell 1, and a cell 2 are all first cells, the positioning assistance information may include configuration information of a positioning reference signal transmitted by the cell 0, configuration information of a positioning reference signal transmitted by the cell 1, and configuration information of a positioning reference signal transmitted by the cell 2. The terminal measures the positioning reference signal on a specific time-frequency resource based on the positioning assistance information, and may determine, based on a resource identifier of the positioning reference signal, a specific first cell that delivers the positioning reference signal, and then report a corresponding measurement result.

In addition, the first request may not include the positioning assistance information, and the LMF separately sends the positioning assistance information and the first request to the first base station. A sequence of sending the first request and sending the positioning assistance information by the LMF to the first base station is not limited.

Step 502: The first base station sends a second request to the terminal based on the first request.

Correspondingly, the terminal receives the second request from the first base station.

The second request is used to request (or indicate or configure) the terminal to measure the positioning reference signal. Specifically, the second request includes a to-be-measured measurement quantity and a measurement configuration parameter, where the to-be-measured measurement quantity is used to indicate a measurement parameter when the terminal measures the positioning reference signal, and the measurement configuration parameter is used to indicate a measurement configuration when the terminal measures the positioning reference signal. For specific descriptions of the to-be-measured measurement quantity and the measurement configuration parameter, refer to related descriptions in step 501.

Further, in the claimed invention, the second request further includes positioning assistance information and it may include second indication information. The positioning assistance information is used to indicate the positioning reference signal transmitted by the first cell. For specific descriptions of the positioning assistance information, refer to related descriptions in step 501. The second indication information is used to indicate an RRC state when the terminal measures the positioning reference signal. The second indication information may be the same as or different from the first indication information. For the RRC state that the second indication information indicates when the terminal measures the positioning reference signal, refer to related descriptions of the RRC state that the first indication information indicates when the terminal measures the positioning reference signal in step 501.

In step 502, because the terminal may be in the RRC connected state or the RRC inactive state, there may be the first base station or another base station in a RAN paging area (paging area) that sends the second request to the terminal. Specifically, the following cases are included:

In a case 1, the terminal is in the RRC connected state. In this case, the first base station is a serving base station of the terminal.

In an example 1, the second request includes the to-be-measured measurement quantity and the measurement configuration parameter. The first base station includes the second request in an RRC message sent to the terminal. The terminal receives the RRC message from the first base station, determines the second request in the RRC message, and measures the positioning reference signal based on the to-be-measured measurement quantity and the measurement configuration parameter in the second request. For example, the RRC message may be an RRC reconfiguration (RRC reconfiguration) message, an RRC release message, or the like.

In an example 2, the second request includes the to-be-measured measurement quantity and the measurement configuration parameter. The first base station may alternatively include the second request in a broadcast message. Optionally, the broadcast message may further carry a terminal identifier. The terminal receives the broadcast message from the first base station. If a terminal identifier in the broadcast message matches the terminal identifier, the terminal determines the second request in the broadcast message, and measures the positioning reference signal based on the to-be-measured measurement quantity and the measurement configuration parameter in the second request.

In the example 1 or the example 2, further, the second request may further include the second indication information. Correspondingly, the terminal may measure the positioning reference signal in the RRC non-connected state based on the second indication information, the to-be-measured measurement quantity, and the measurement configuration parameter in the second request.

In a case 2, the terminal is in the RRC inactive state. In this case, the first base station is a last serving base station of the terminal.

In an example 3, the second request includes the to-be-measured measurement quantity and the measurement configuration parameter. The first base station sends the second request to another base station in a RAN paging area, and all base stations in the RAN paging area include the second request in respective paging messages used to page the terminal. The terminal receives a paging message from a camped base station of the terminal, determines the second request in the paging message, and measures the positioning reference signal based on the to-be-measured measurement quantity and the measurement configuration parameter in the second request.

In an example 4, the second request includes the to-be-measured measurement quantity and the measurement configuration parameter. The first base station sends the second request to another base station in a RAN paging area, and all base stations in the RAN paging area include the second request in respective broadcast messages. Optionally, the broadcast message may further carry a terminal identifier. The terminal receives a broadcast message from a camped base station of the terminal. If a terminal identifier in the broadcast message matches the terminal identifier, the terminal determines the second request in the broadcast message, and measures the positioning reference signal based on the to-be-measured measurement quantity and the measurement configuration parameter in the second request.

Further, in the example 3 or the example 4, the second request may further include the second indication information. Correspondingly, the terminal may measure the positioning reference signal in the RRC non-connected state based on the second indication information, the to-be-measured measurement quantity, and the measurement configuration parameter in the second request.

In an example 5, the first base station sends the second request to another base station in a RAN paging area, and all base stations in the RAN paging area send, to the terminal, respective paging messages used to page the terminal. The terminal receives a paging message from a camped base station of the terminal and requests access, so that the terminal is in the RRC connected state. For specific implementations in which the base station sends the second request to the terminal and the terminal determines to measure the positioning reference signal, refer to the example 1 and the example 2 in the case 1. Details are not described again.

It should be noted that if the second request further includes the positioning assistance information, for a manner in which the first base station sends the second request to the terminal, refer to the example 1 to the example 5. Details are not described again.

In an embodiment not claimed by the present application, if the second request does not include the positioning assistance information, the positioning assistance information may be separately sent to the terminal by the first base station or another base station in the RAN paging area. Specifically, there are the following two cases based on the RRC states of the terminal:
In a case 1, the terminal is in the RRC connected state.

In an example 6, the first base station may include the positioning assistance information in a broadcast message. Correspondingly, the terminal receives the broadcast message from the first base station, and determines the positioning assistance information in the broadcast message.

In an example 7, the first base station may include the positioning assistance information in an RRC message sent to the terminal. Correspondingly, the terminal receives the RRC message from the first base station, and determines the positioning assistance information in the RRC message. For example, the RRC message may be an RRC reconfiguration message.

In a case 2, the terminal is in the RRC inactive state.

In an example 8, the first base station sends the positioning assistance information to the another base station in the RAN paging area, and all base stations in the RAN paging area include the positioning assistance information in respective broadcast messages. Correspondingly, the terminal receives a broadcast message from a camped base station of the terminal, and determines the positioning assistance information in the broadcast message.

It should be noted that a sequence of receiving the second request and receiving the positioning assistance information by the terminal is not limited.

In this optional manner, the positioning assistance information may be obtained by the first base station from the LMF, or the positioning assistance information may be obtained by the first base station from a base station corresponding to the first cell.

If the positioning assistance information is obtained by the first base station from the LMF, the positioning assistance information may be carried in the first request sent by the LMF to the first base station, or may be a message separately sent by the LMF to the first base station. For specific implementation, refer to descriptions in step 501.

If the positioning assistance information is obtained by the first base station from the base station corresponding to the first cell, the base station corresponding to the first cell may be another base station, and the first base station may obtain, through an Xn interface, the configuration information of the positioning reference signal in the first cell from the base station corresponding to the first cell. Specifically, there may be the following two examples:
In the first example, the first base station sends an information request to the base station corresponding to the first cell, where the information request is used to request, from the base station corresponding to the first cell, the configuration information of the positioning reference signal transmitted by the first cell. Correspondingly, the base station corresponding to the first cell receives the information request from the first base station, and sends, to the first base station, the configuration information of the positioning reference signal transmitted by the first cell.

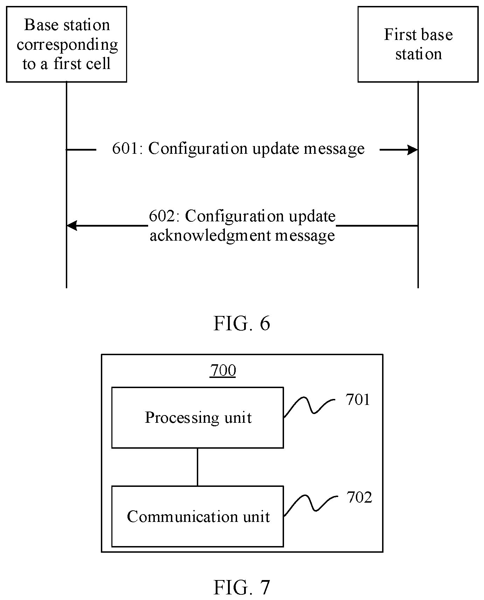

In the second example, in an Xn setup (Xn setup) procedure or an NG-RAN node configuration update (NG-RAN node configuration update) procedure, the base station corresponding to the first cell sends a configuration update (configuration update) message to the first base station, where the configuration update message carries the configuration information of the positioning reference signal transmitted by the first cell. FIG. 6 is a schematic flowchart of exchanging a configuration update message between neighboring base stations.

Step 601: The base station corresponding to the first cell sends the configuration update message to the first base station, and correspondingly the first base station receives the configuration update message from the base station corresponding to the first cell, where the configuration update message carries the configuration information of the positioning reference signal transmitted by the first cell.

Step 602: The first base station sends a configuration update acknowledgment (configuration update acknowledgment) message to the base station corresponding to the first cell, and correspondingly the base station corresponding to the first cell receives the configuration update acknowledgment message from the first base station.

In addition, the positioning assistance information may alternatively be obtained by another base station from the LMF and sent to the terminal. For a specific sending manner, refer to the foregoing descriptions of sending, by the first base station, the positioning assistance information to the terminal.

In this application, the first base station or another base station in the base station corresponding to the first cell may include the positioning assistance information in a positioning system information block (PosSIB), and broadcast the positioning system information block to the terminal as a broadcast message. The terminal receives the positioning system information block, and determines the positioning assistance information in the positioning system information block.

In some scenarios, the second request may not include the second indication information. If the base station determines that the first request is used to indicate the terminal to measure the positioning reference signal in the RRC non-connected state, the base station may send the second indication information to the terminal as a separate message. Correspondingly, the terminal receives the second indication information, and determines, based on the second indication information, to measure the positioning reference signal in the RRC non-connected state.

This application provides another implementation. The base station determines that the first request is used to indicate the terminal to measure the positioning reference signal in the RRC non-connected state, and the base station may include the second request in an RRC release message. Correspondingly, the terminal receives the RRC release message, releases an RRC connection to the first base station based on the RRC release message, and measures the positioning reference signal in the RRC non-connected state based on the second request in the RRC release message.

It should be noted that the indicating, by the first base station, the terminal to measure the positioning reference signal in the RRC non-connected state may be specifically: indicating, by the first base station, the terminal to measure the positioning reference signal in the RRC inactive state or the RRC idle state. For the indicating, by the first base station, the terminal to measure the positioning reference signal in the RRC inactive state or the RRC idle state, refer to the foregoing descriptions that the first base station includes the second indication information in the second request sent to the terminal, or the base station sends the second indication information to the terminal as the separate message, or the first base station sends the RRC release message to the terminal.

It should be further noted that, the terminal receives the second indication information or the RRC release message, and the terminal releases the RRC connection to the first base station. If the first base station further needs to send other information to the terminal, the first base station may include to-be-sent information in the broadcast message. For example, the first base station first sends, to the terminal, the RRC release message that carries the second request, and then sends, to the terminal, the broadcast message that carries the positioning assistance information.

In this embodiment of this application, the indicating, by the first base station, the terminal to measure the positioning reference signal in the RRC non-connected state may be applied to a periodically reported terminal positioning process. This process is explained as follows: The terminal measures the positioning reference signal, to obtain a measurement result, and reports, based on a reporting periodicity, the measurement result to a base station corresponding to a camped cell of the terminal. It should be understood that the terminal in the RRC non-connected state may move from coverage of a serving cell before the terminal enters the RRC non-connected state to coverage of another cell. If the terminal in the RRC non-connected state is located in coverage of a cell A in a time period A, the cell A is referred to as a camped cell of the terminal in the time period A; or if the terminal in the RRC non-connected state is located in coverage of a cell B in a time period B, the cell B is referred to as a camped cell of the terminal in the time period B.

Optionally, the first base station configures the reporting periodicity of the terminal. If determining, based on the reporting periodicity, that the measurement result does not need to be reported, the terminal keeps in the RRC non-connected state; or if determining that the measurement result needs to be reported, the terminal accesses the camped cell of the terminal, and reports the measurement result to the base station corresponding to the camped cell of the terminal. In this manner, if the terminal does not need to report the measurement result, the terminal may keep in the RRC non-connected state. This helps reduce power consumption of the terminal.

In addition, the first base station may further configure a measurement periodicity of the terminal. The terminal measures the positioning reference signal based on the measurement periodicity, to obtain the measurement result. If determining, based on the reporting periodicity, that the measurement result does not need to be reported, the terminal keeps in the RRC non-connected state; or if determining that the measurement result needs to be reported, the terminal accesses the base station corresponding to the camped cell of the terminal, and reports the measurement result to the base station corresponding to the camped cell of the terminal.

Herein, the base station corresponding to the camped cell of the terminal may be the first base station or another base station (where the another base station is a second base station for short below). For details, refer to descriptions in step 504 and step 505.

Step 503: The terminal measures the positioning reference signal based on the second request, to obtain the measurement result.

The second request may include the to-be-measured measurement quantity and the measurement configuration parameter, and includes the positioning assistance information and it may include the second indication information. The following provides detail descriptions that the second request includes the to-be-measured measurement quantity and the measurement configuration parameter, or that the second request includes the to-be-measured measurement quantity, the measurement configuration parameter, and the positioning assistance information.

In the claimed embodiment, the second request includes the positioning assistance information, and it may include to-be-measured measurement quantity, and the measurement configuration parameter. The terminal only needs to receive the second request from the first base station, then determines time-frequency resource information of the positioning reference signal in the first cell based on the positioning assistance information in the second request, and measures a corresponding positioning reference signal on each time-frequency resource based on the measurement configuration parameter in the second request, to obtain the measurement result corresponding to the to-be-measured measurement quantity in the second request.

In another implementation, the second request includes the to-be-measured measurement quantity and the measurement configuration parameter. The terminal needs to receive the second request from the first base station, receive the positioning assistance information sent by the first base station or the another base station in the base station corresponding to the first cell, then determine time-frequency resource information of the positioning reference signal in the first cell based on the positioning assistance information, and measure a corresponding positioning reference signal on each time-frequency resource based on the measurement configuration parameter in the second request, to obtain the measurement result corresponding to the to-be-measured measurement quantity in the second request.

Still with reference to the example in FIG. 4. It is assumed that the to-be-measured measurement quantity is a reference signal time difference, the measurement periodicity is 1s, and a quantity of measurement times is 10. The terminal measures, by using 1s as the measurement periodicity, a reference signal time difference between a positioning reference signal 0 in a cell 0 and a positioning reference signal 1 in a cell 1 for a total of 10 times, to obtain 10 reference signal time differences between the cell 0 and the cell 1. Similarly, the terminal obtains 10 reference signal time differences between the cell 0 and a cell 2 through measurement. In this way, the obtained 20 reference signal time differences are used as the measurement result.

For ease of description of step 504 and step 505, the following may first explain an implementation in which the terminal sends the measurement result in different RRC states.

In this application, the measurement result sent by the terminal may be referred to as a measurement report (measurement report). The measurement result may include: a measurement value (for example, an angle of arrival, a reference signal time difference, or a receiving transmitting time difference) obtained by the terminal by measuring the to-be-measured measurement quantity, a positioning reference signal identifier, measurement quality, a measurement identifier, or the like.

In a case 1, the terminal is in the RRC connected state.

In an example a, the terminal is still served by the first base station, and the terminal sends the measurement result to the first base station. The first base station determines, based on a measurement identifier in a context of the terminal, that the measurement result is associated with the measurement identifier in the context of the terminal, and further sends the measurement result to the LMF based on address information of the LMF in the context of the terminal.

In an example b, the terminal is handed over to a cell of the second base station, and the terminal sends the measurement result to the second base station. The second base station determines, based on a measurement identifier in a context of the terminal, that the measurement result is associated with the measurement identifier in the context of the terminal, and further sends the measurement result to the LMF based on address information of the LMF in the context of the terminal.

In a case 2, the terminal is in the RRC inactive state.

In an example c, the base station corresponding to the camped cell of the terminal is the first base station. The terminal accesses the first base station, and sends the measurement result to the first base station. The first base station determines, based on a measurement identifier in a context of the terminal, that the measurement result is associated with the measurement identifier in the context of the terminal, and further sends the measurement result to the LMF based on address information of the LMF in the context of the terminal.

In an example d, the base station corresponding to the camped cell of the terminal is the second base station. The terminal requests to access the second base station, and the second base station sends a context request to the first base station, where the context request is used to request a context of the terminal from the first base station. The first base station sends the context of the terminal to the second base station. The terminal accesses the second base station, and sends the measurement result to the second base station. The second base station determines, based on a measurement identifier in the context of the terminal, that the measurement result is associated with the measurement identifier in the context of the terminal, and further sends the measurement result to the LMF based on address information of the LMF in the context of the terminal.

In addition, i n another possible manner of the example d, the terminal sends the measurement result to the second base station, and the second base station may also send the measurement result to the LMF through the first base station. In this possible manner, the context of the terminal further includes other indication information in addition to the measurement identifier, for example, a measurement result request and a to-be-measured measurement quantity. The other indication information is used to indicate the second base station to send, to the first base station, the measurement result reported by the terminal. For example, the context of the terminal includes the measurement result request, and the second base station receives the measurement result reported by the terminal, and determines, based on the measurement result request, to send the measurement result to the first base station.

In a case 3, the terminal is in the RRC idle state.

In an example e, the base station corresponding to the camped cell of the terminal is the first base station. The terminal requests to access the first base station. The first base station needs to send an initial NAS message (initial NAS message) to an AMF corresponding to the first base station. The AMF corresponding to the first base station sends a context of the terminal to the first base station. The terminal accesses the first base station, and sends the measurement result to the first base station. The first base station determines, based on a measurement identifier in the context of the terminal, that the measurement result is associated with the measurement identifier in the context of the terminal, and further sends the measurement result to the LMF based on address information of the LMF in the context of the terminal.

In an example f, the base station corresponding to the camped cell of the terminal is the second base station. The terminal requests to access the second base station. The second base station needs to send an initial NAS message to an AMF corresponding to the second base station. If the AMF corresponding to the second base station is the same as an AMF corresponding to the first base station, that is, the AMF corresponding to the second base station includes a context of the terminal, the AMF corresponding to the second base station sends the context of the terminal to the second base station. The terminal accesses the second base station, and sends the measurement result to the second base station. The second base station determines, based on a measurement identifier in the context of the terminal, that the measurement result is associated with the measurement identifier in the context of the terminal, and further sends the measurement result to the LMF based on address information of the LMF in the context of the terminal.

In an example g, the base station corresponding to the camped cell of the terminal is the second base station. The terminal requests to access the second base station. The second base station needs to send an initial NAS message to an AMF corresponding to the second base station. If the AMF corresponding to the second base station is different from an AMF corresponding to the first base station, that is, the AMF corresponding to the second base station does not include a context of the terminal, the AMF corresponding to the second base station requests the context of the terminal from the AMF corresponding to the first base station, and then the AMF corresponding to the second base station sends the context of the terminal to the second base station. The terminal accesses the second base station, and sends the measurement result to the second base station. The second base station determines, based on a measurement identifier in the context of the terminal, that the measurement result is associated with the measurement identifier in the context of the terminal, and further sends the measurement result to the LMF based on address information of the LMF in the context of the terminal.

In the foregoing example c to example g, the terminal accesses the base station corresponding to the camped cell, and the terminal may send, by using an RRC message, the measurement result to the base station corresponding to the camped cell. In addition, the terminal may further include the measurement result in an initial access request. If the terminal is in the RRC idle state, the terminal may include the measurement result in an RRC setup request (RRC setup request) message or an RRC setup complete (RRC setup complete) message. If the terminal is in the RRC inactive state, the terminal may include the measurement result in an RRC resume request (RRC resume request) message or an RRC resume complete (RRC resume complete) message.

As described above, there is a first case, and the first case is applicable to the foregoing example a, example c, and example e. In the first case, there are the following steps 504a and 505a.

Step 504a: The terminal sends the measurement result to the first base station.

Correspondingly, the first base station receives the measurement result from the terminal.

Step 505a: The first base station sends the measurement result to the LMF.

Correspondingly, the LMF receives the measurement result from the first base station.

As described above, there is still a second case, and the second case is applicable to the foregoing example b, example d, example f, and example g. In the second case, there are the following steps 504b and 505b.

Step 504b: The terminal sends the measurement result to the second base station.

Correspondingly, the second base station receives the measurement result from the terminal.

Step 505b: The second base station sends the measurement result to the LMF.

Correspondingly, the LMF receives the measurement result from the second base station.

Step 506: The LMF determines the location information of the terminal based on the measurement result.

With reference to the example in FIG. 4, the measurement result of the terminal includes a time difference of arrival τ_{0,1}, between the positioning reference signal in the cell 0 and the positioning reference signal in the cell 1, measured by the terminal, and a time difference of arrival τ_{0,2}, between the positioning reference signal in the cell 0 and the positioning reference signal in the cell 2, measured by the terminal. The LMF determines, based on the time difference of arrival τ_{0,1}, a first hyperbola formed by a difference between distances from the terminal to the cell 0 and the cell 1 (d0-d1), and determines, based on the time difference of arrival τ_{0,2}, a second hyperbola formed by a difference between distances from the terminal to the cell 0 and the cell 2 (d0-d2). The LMF determines location coordinates of the terminal based on the first hyperbola, the second hyperbola, location coordinates of the cell 0, location coordinates of the cell 1, and location coordinates of the cell 2.

It should be noted that the LMF is connected to the first base station by using an NRPPa protocol. To be specific, in step 501, the first request may be carried in an existing NRPPa message sent by the LMF to the first base station, for example, a measurement request (measurement request), or in a newly defined NRPPa message, for example, a downlink location measurement request (DL location measurement request). In step 505a/b, the measurement result may be carried in an existing NRPPa message sent by the first base station/the second base station to the LMF, for example, a measurement response (measurement response), or in a newly defined NRPPa message, for example, a downlink location measurement result (DL location measurement result), or a downlink location measurement response (DL location measurement response).

In addition, this embodiment of this application is also applicable to a scenario in which the LMF and the base station are co-deployed, and the base station co-deployed with the LMF is not a serving base station of the terminal. In the co-deployment scenario, the LMF may be connected to the first base station/the second base station through an Xn interface. When the LMF requests positioning of the terminal, the LMF may send the first request to the first base station through the Xn interface. The first base station determines that the first request is used to request the terminal to measure the positioning reference signal, and sends the second request to the terminal. Correspondingly, the first base station/the second base station may send the measurement result of the terminal to the LMF through the Xn interface.

For an implementation in the co-deployment scenario, refer to step 501 to step 506. A difference lies only in that, in step 501 to step 506, the LMF communicates with the first base station/the second base station through the NG-C interface, and sends the NRPPa message; however, in the co-deployment scenario, the LMF communicates with the first base station/the second base station through the Xn interface, and sends an XnAP message.

For example, in the co-deployment scenario, in step 501, the first request may be carried in an existing XnAP message, for example, a configuration update (NG-RAN node configuration update) message, or in a newly defined XnAP message, for example, a measurement request (measurement request) message. In step 505a/b, the measurement result may be carried in an existing XnAP message, for example, a configuration update acknowledgment (NG-RAN node configuration update acknowledgment) message, or in a newly defined XnAP message, for example, a measurement response (measurement response) message.

According to this solution, the positioning management function network element sends the first request to the first base station, where the first request is used to request the first base station to indicate the terminal to measure the positioning reference signal. The first base station determines the second request based on the first request, and sends the second request to the terminal, where the second request is used to request the terminal to measure the positioning reference signal. The positioning management function network element communicates with the first base station, and the first base station communicates with the terminal. When the terminal is in various RRC states, the positioning management function network element may request, through the first base station, the terminal to measure the positioning reference signal. In addition, when the positioning management function network element and the base station are co-deployed, the positioning management function network element may also request, through the first base station, the terminal to measure the positioning reference signal.

Embodiments described in this specification may be independent solutions, or may be combined based on internal logic. These solutions all fall within the protection scope of this application.

It may be understood that, in the foregoing method embodiments, the method and the operation that are implemented by the terminal may be implemented by a component (for example, a chip or a circuit) that may be used for the terminal, and the method and the operation that are implemented by the base station may be implemented by a component (for example, a chip or a circuit) that may be used for the base station.

In the foregoing embodiments provided in this application, the methods provided in embodiments of this application are separately described from a perspective of interaction between devices. To implement functions in the foregoing methods provided in embodiments of this application, the terminal device and the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is an example, and is merely logical function division. During actual implementation, another division manner may be used. In addition, functional modules in embodiments of this application may be integrated into one processor, or each of the modules may exist alone physically, or two or more modules are integrated into one module. The integrated module may be implemented in a form of hardware, or may be implemented in a form of a software functional module.

Based on the foregoing content and the same concept, as shown in FIG. 7, an embodiment of this application further provides a communication apparatus 700, configured to implement functions of the terminal or the base station in the foregoing methods. For example, the communication apparatus may be a software module or a chip system. In this embodiment of this application, the chip system may include a chip, or may include a chip and another discrete component.

The communication apparatus 700 may include a processing unit 701 and a communication unit 702.

In this embodiment of this application, the communication unit may also be referred to as a transceiver unit, and may include a sending unit and/or a receiving unit, which are respectively configured to perform sending and receiving steps of the terminal device or the network device in the foregoing method embodiments.

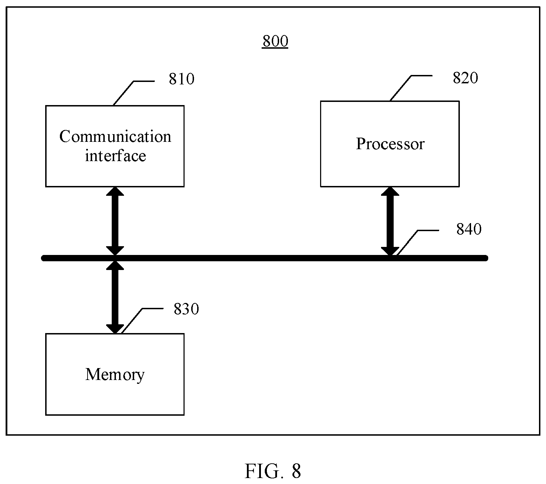

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

In a possible design, the communication apparatus 700 may implement steps or procedures performed by the first base station or the terminal in the foregoing method embodiments. Descriptions are separately provided below.

For example, when the communication apparatus 700 implements the function of the first base station in the procedure shown in FIG. 5,
the communication unit 702 is configured to perform a sending operation and a receiving operation of the first base station in the method embodiment shown in FIG. 5, and the processing unit 701 is configured to perform an operation other than the sending operation and the receiving operation of the first base station in the method embodiment shown in FIG. 5. For example, the communication unit 702 is configured to perform the sending step and the receiving step of the first base station in the embodiment shown in FIG. 5, for example, step 501. The processing unit 701 is configured to perform an operation other than the sending operation and the receiving operation of the first base station in the embodiment shown in FIG. 5, for example, determining the second request based on the first request in step 502.

For example, when the communication apparatus 700 implements the function of the terminal in the procedure shown in FIG. 5,
the communication unit 702 is configured to perform a sending operation and a receiving operation of the terminal in the method embodiment shown in FIG. 5, and the processing unit 701 is configured to perform an operation other than the sending operation and the receiving operation of the terminal in the method embodiment shown in FIG. 5. For example, the communication unit 702 is configured to perform the sending step and the receiving step of the terminal in the embodiment shown in FIG. 5, for example, step 502. The processing unit 701 is configured to perform an operation other than the sending operation and the receiving operation of the terminal in the embodiment shown in FIG. 5, for example, step 503.

FIG. 8 shows an apparatus 800 according to an embodiment of this application. The apparatus shown in FIG. 8 may be implemented by a hardware circuit of the apparatus shown in FIG. 7. The communication apparatus is applicable to the flowchart shown in FIG. 5, and performs functions of the first base station or the terminal in the foregoing method embodiments. For ease of description, FIG. 8 shows only main components of the communication apparatus.

The apparatus 800 shown in FIG. 8 includes at least one processor 820, configured to implement the function of the first base station or the terminal in FIG. 5 provided in embodiments of this application.

The apparatus 800 may further include at least one memory 830, configured to store program instructions and/or data. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. At least one of the at least one memory may be included in the processor.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

The apparatus 800 may further include a communication interface 810, configured to communicate with another device through a transmission medium, so that an apparatus in the apparatus 800 can communicate with the another device. In embodiments of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function, or may be an interface circuit.

The apparatus 800 may further include a communication line 840. The communication interface 810, the processor 820, and the memory 830 may be connected to each other through the communication line 840. The communication line 840 may be a peripheral component interconnect (peripheral component interconnect, PCI for short) bus, an extended industry standard architecture (extended industry standard architecture, EISA for short) bus, or the like. The communication line 840 may be classified into an address bus, a data bus, a control bus, and the like. For ease of representation, only one thick line is used to represent the bus in FIG. 8, but this does not mean that there is only one bus or only one type of bus.

Based on the foregoing content and the same concept, this application provides a communication apparatus. The communication apparatus includes a processor and a communication interface. The communication interface is configured to: receive a signal from a communication apparatus other than the communication apparatus and transmit the signal to the processor, or send a signal from the processor to a communication apparatus other than the communication apparatus. The processor is configured to implement, through a logic circuit or by executing code instructions, the method in any embodiment related to the first base station or any embodiment related to the terminal.

Based on the foregoing content and the same concept, this application provides a computer-readable storage medium. The computer-readable storage medium stores a computer program or instructions; and when the computer program or the instructions are executed by a communication apparatus, the method in any embodiment related to the first base station or any embodiment related to the terminal is implemented.

Based on the foregoing content and the same concept, this application provides a computer program product. The computer program product includes a computer program or instructions; and when the computer program or the instructions are executed by a communication apparatus, the method in any embodiment related to the first base station or any embodiment related to the terminal is implemented.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include compute-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

## Claims

1. A positioning method, comprising:
receiving (502), by a terminal, a second request originated by a first base station, wherein the second request is used to request the terminal to measure a positioning reference signal;
measuring (503), by the terminal, the positioning reference signal based on the second request, to obtain a measurement result; and
reporting (504a, 504b), by the terminal, the measurement result to the first base station or a second base station,
the method being **characterized in that** the second request comprises positioning assistance information, and the positioning assistance information is used to indicate the positioning reference signal, and
the positioning assistance information comprises at least one of a time-frequency resource, a transmission periodicity, and a quantity of symbols of the positioning reference signal.

2. The method according to claim 1, wherein the terminal is in a radio resource control, RRC, connected state, and the second request is carried in an RRC message or a broadcast message from the first base station; or the terminal is in an RRC inactive state, and the second request is carried in a broadcast message from the first base station or a paging message used to page the terminal.

3. The method according to claim 1, wherein the receiving, by a terminal, a second request from a first base station comprises:
receiving, by the terminal, an RRC release message from the first base station, wherein the RRC release message carries the second request.

4. The method according to claim 1, wherein the method further comprises:
receiving, by the terminal, second indication information from the first base station, wherein the second indication information is used to indicate the terminal to measure the positioning reference signal in an RRC non-connected state.

5. The method according to claim 1, wherein the second request comprises a to-be-measured measurement quantity and a measurement configuration parameter, the to-be-measured measurement quantity comprises at least one of an angle of arrival, a reference signal time difference, and a receiving transmitting time difference, and the measurement configuration parameter comprises at least one of a measurement periodicity, a quantity of measurement times, whether periodic reporting is performed, a reporting periodicity, and a measurement identifier.

6. A communication apparatus (700), comprising:
a communication unit (702) and a processing unit (701), wherein
the communication unit (702) is configured to receive a second request originated by a first base station, wherein the second request is used to request the communication apparatus to measure a positioning reference signal;
the processing unit (701) is configured to measure the positioning reference signal based on the second request, to obtain a measurement result; and
the communication unit (702) is further configured to report the measurement result to the first base station or a second base station,
the apparatus being **characterized in that** the second request comprises positioning assistance information, and the positioning assistance information is used to indicate the positioning reference signal, and
the positioning assistance information comprises at least one of a time-frequency resource, a transmission periodicity, and a quantity of symbols of the positioning reference signal.

7. The communication apparatus (700) according to claim 6, wherein the communication apparatus (700) is in a radio resource control, RRC, connected state, and the second request is carried in an RRC message or a broadcast message from the first base station; or the communication apparatus (700) is in an RRC inactive state, and the second request is carried in a broadcast message from the first base station or a paging message used to page the communication apparatus.

8. The communication apparatus (700) according to claim 6, wherein the communication unit (702) is specifically configured to receive an RRC release message from the first base station, wherein the RRC release message carries the second request.

9. The communication apparatus (700) according to claim 6, wherein the communication unit (702) is further configured to receive second indication information from the first base station, wherein the second indication information is used to indicate the communication unit to measure the positioning reference signal in an RRC non-connected state.

10. The communication apparatus (700) according to claim 6, wherein the second request comprises a to-be-measured measurement quantity and a measurement configuration parameter, the to-be-measured measurement quantity comprises at least one of an angle of arrival, a reference signal time difference, and a receiving transmitting time difference, and the measurement configuration parameter comprises at least one of a measurement periodicity, a quantity of measurement times, whether periodic reporting is performed, a reporting periodicity, and a measurement identifier.

11. A computer-readable storage medium, wherein the computer-readable storage medium stores a computer program or instructions; and when the computer program or the instructions are executed by a processor, the method according to any one of claims 1 to 5 is implemented.

## Patentansprüche

1. Positionierungsverfahren, umfassend:
Empfangen (502), durch ein Endgerät, einer zweiten Anforderung, die von einer ersten Basisstation stammt, wobei die zweite Anforderung verwendet wird, um das Endgerät aufzufordern, ein Positionierungsreferenzsignal zu messen;
Messen (503), durch das Endgerät, des Positionierungsreferenzsignals basierend auf der zweiten Anforderung, um ein Messergebnis zu erlangen; und
Melden (504a, 504b), durch das Endgerät, des Messergebnisses an die erste Basisstation oder eine zweite Basisstation, wobei das Verfahren **dadurch gekennzeichnet ist, dass**
die zweite Anforderung Positionierungshilfsinformationen umfasst und die Positionierungshilfsinformationen verwendet werden, um das Positionierungsreferenzsignal anzugeben, und
die Positionierungshilfsinformationen mindestens eines von einer Zeit-Frequenz-Ressource, einer Übertragungsperiodizität und einer Anzahl von Symbolen des Positionierungsreferenzsignals umfassen.

2. Verfahren nach Anspruch 1, wobei sich das Endgerät in einem Funkressourcensteuerungs-Verbindungszustand, RRC-Verbindungszustand, befindet und die zweite Anforderung in einer RRC-Nachricht oder einer Rundsendenachricht von der ersten Basisstation enthalten ist; oder sich das Endgerät in einem RRC-Inaktivzustand befindet und die zweite Anforderung in einer Rundsendenachricht von der ersten Basisstation oder einer Funkrufnachricht enthalten ist, die verwendet wird, um einen Funkruf an das Endgerät zu senden.

3. Verfahren nach Anspruch 1, wobei das Empfangen, durch ein Endgerät, einer zweiten Anforderung von einer ersten Basisstation Folgendes umfasst:
Empfangen, durch das Endgerät, einer RRC-Freigabenachricht von der ersten Basisstation, wobei die RRC-Freigabenachricht die zweite Anforderung enthält.

4. Verfahren nach Anspruch 1, wobei das Verfahren ferner Folgendes umfasst:
Empfangen, durch das Endgerät, von zweiten Angabeinformationen von der ersten Basisstation, wobei die zweiten Angabeinformationen verwendet werden, um dem Endgerät anzugeben, das Positionierungsreferenzsignal in einem RRC-Nichtverbindungszustand zu messen.

5. Verfahren nach Anspruch 1, wobei die zweite Anforderung eine zu messende Messgröße und einen Messkonfigurationsparameter umfasst, die zu messende Messgröße mindestens eines von einem Ankunftswinkel, einer Referenzsignalzeitdifferenz und einer Empfangs-/Sendezeitdifferenz umfasst und der Messkonfigurationsparameter mindestens eines von einer Messperiodizität, einer Anzahl von Messzeitpunkten, ob eine periodische Meldung durchgeführt wird, einer Meldungsperiodizität und einer Messkennung umfasst.

6. Kommunikationsvorrichtung (700), umfassend:
eine Kommunikationseinheit (702) und eine Verarbeitungseinheit (701), wobei
die Kommunikationseinheit (702) dazu konfiguriert ist, eine zweite Anforderung zu empfangen, die von einer ersten Basisstation stammt, wobei die zweite Anforderung dazu verwendet wird, die Kommunikationsvorrichtung aufzufordern, ein Positionierungsreferenzsignal zu messen;
die Verarbeitungseinheit (701) dazu konfiguriert ist, das Positionierungsreferenzsignal basierend auf der zweiten Anforderung zu messen, um ein Messergebnis zu erlangen; und
die Kommunikationseinheit (702) ferner dazu konfiguriert ist, das Messergebnis an die erste Basisstation oder eine zweite Basisstation zu melden, wobei die Vorrichtung **dadurch gekennzeichnet ist, dass**
die zweite Anforderung Positionierungshilfsinformationen umfasst und die Positionierungshilfsinformationen verwendet werden, um das Positionierungsreferenzsignal anzugeben, und
die Positionierungshilfsinformationen mindestens eines von einer Zeit-Frequenz-Ressource, einer Übertragungsperiodizität und einer Anzahl von Symbolen des Positionierungsreferenzsignals umfassen.

7. Kommunikationsvorrichtung (700) nach Anspruch 6, wobei sich die Kommunikationsvorrichtung (700) in einem Funkressourcensteuerungs-Verbindungszustand, RRC-Verbindungszustand, befindet und die zweite Anforderung in einer RRC-Nachricht oder einer Rundsendenachricht von der ersten Basisstation enthalten ist; oder sich die Kommunikationsvorrichtung (700) in einem RRC-Inaktivzustand befindet und die zweite Anforderung in einer Rundsendenachricht von der ersten Basisstation oder einer Funkrufnachricht enthalten ist, die verwendet wird, um einen Funkruf an die Kommunikationsvorrichtung zu senden.

8. Kommunikationsvorrichtung (700) nach Anspruch 6, wobei die Kommunikationseinheit (702) speziell dafür konfiguriert ist, eine RRC-Freigabenachricht von der ersten Basisstation zu empfangen, wobei die RRC-Freigabenachricht die zweite Anforderung trägt.

9. Kommunikationsvorrichtung (700) nach Anspruch 6, wobei die Kommunikationseinheit (702) ferner dazu konfiguriert ist, zweite Angabeinformationen von der ersten Basisstation zu empfangen, wobei die zweiten Angabeinformationen dazu verwendet werden, der Kommunikationseinheit anzugeben, das Positionierungsreferenzsignal in einem RRC-Nichtverbindungszustand zu messen.

10. Kommunikationsvorrichtung (700) nach Anspruch 6, wobei die zweite Anforderung eine zu messende Messgröße und einen Messkonfigurationsparameter umfasst, die zu messende Messgröße mindestens eines von einem Ankunftswinkel, einer Referenzsignalzeitdifferenz und einer Empfangs-/Sendezeitdifferenz umfasst und der Messkonfigurationsparameter mindestens eines von einer Messperiodizität, einer Anzahl von Messzeitpunkten, ob eine periodische Meldung durchgeführt wird, einer Meldungsperiodizität und einer Messkennung umfasst.

11. Computerlesbares Speichermedium, wobei das computerlesbare Speichermedium ein Computerprogramm oder Anweisungen speichert; und, wenn das Computerprogramm oder die Anweisungen durch einen Prozessor ausgeführt werden, das Verfahren nach einem der Ansprüche 1 bis 5 umgesetzt wird.

## Revendications

1. Procédé de positionnement, comprenant :
la réception (502), par un terminal, d'une seconde demande provenant d'une première station de base, dans lequel la seconde demande est utilisée pour demander au terminal de mesurer un signal de référence de positionnement ;
la mesure (503), par le terminal, du signal de référence de positionnement à partir de la seconde demande, pour obtenir un résultat de mesure ; et
le rapport (504a, 504b), par le terminal, du résultat de mesure à la première station de base ou à une seconde station de base, le procédé étant **caractérisé en ce que**
la seconde demande comprend des informations d'assistance de positionnement, et les informations d'assistance de positionnement sont utilisées pour indiquer le signal de référence de positionnement, et
les informations d'assistance de positionnement comprennent au moins l'une d'une ressource temps-fréquence, d'une périodicité de transmission et d'une quantité de symboles du signal de référence de positionnement.

2. Procédé selon la revendication 1, dans lequel le terminal est dans un état connecté de commande de ressources radio, RRC, et la seconde demande est transportée dans un message RRC ou un message de diffusion provenant de la première station de base ; ou le terminal est dans un état inactif RRC, et la seconde demande est transportée dans un message de diffusion provenant de la première station de base ou un message de radiomessagerie utilisé pour appeler le terminal.

3. Procédé selon la revendication 1, dans lequel la réception, par un terminal, d'une seconde demande en provenance d'une première station de base comprend :
la réception, par le terminal, d'un message de libération RRC provenant de la première station de base, dans lequel le message de libération RRC transporte la seconde demande.

4. Procédé selon la revendication 1, dans lequel le procédé comprend également :
la réception, par le terminal, des secondes informations d'indication provenant de la première station de base, dans lequel les secondes informations d'indication sont utilisées pour indiquer au terminal de mesurer le signal de référence de positionnement dans un état non connecté RRC.

5. Procédé selon la revendication 1, dans lequel la seconde demande comprend une quantité de mesure à mesurer et un paramètre de configuration de mesure, la quantité de mesure à mesurer comprend au moins l'un d'un angle d'arrivée, d'une différence de temps de signal de référence et d'une différence de temps de transmission de réception, et le paramètre de configuration de mesure comprend au moins l'un d'une périodicité de mesure, d'une quantité de temps de mesure, si un rapport périodique est effectué, d'une périodicité de rapport et d'un identifiant de mesure.

6. Appareil de communication (700), comprenant :
une unité de communication (702) et une unité de traitement (701), dans lequel
l'unité de communication (702) est configurée pour recevoir une seconde demande provenant d'une première station de base, dans lequel la seconde demande est utilisée pour demander à l'appareil de communication de mesurer un signal de référence de positionnement ;
l'unité de traitement (701) est configurée pour mesurer le signal de référence de positionnement à partir de la seconde demande afin d'obtenir un résultat de mesure ; et
l'unité de communication (702) est également configurée pour signaler le résultat de mesure à la première station de base ou à une seconde station de base, l'appareil étant **caractérisé en ce que**
la seconde demande comprend des informations d'assistance de positionnement, et les informations d'assistance de positionnement sont utilisées pour indiquer le signal de référence de positionnement, et
les informations d'assistance de positionnement comprennent au moins l'une d'une ressource temps-fréquence, d'une périodicité de transmission et d'une quantité de symboles du signal de référence de positionnement.

7. Appareil de communication (700) selon la revendication 6, dans lequel l'appareil de communication (700) est dans un état connecté de commande de ressources radio, RRC, et la seconde demande est transportée dans un message RRC ou un message de diffusion provenant de la première station de base ; ou l'appareil de communication (700) est dans un état inactif RRC, et la seconde demande est transportée dans un message de diffusion provenant de la première station de base ou un message de radiomessagerie utilisé pour appeler l'appareil de communication.

8. Appareil de communication (700) selon la revendication 6, dans lequel l'unité de communication (702) est spécifiquement configurée pour recevoir un message de libération RRC provenant de la première station de base, dans lequel le message de libération RRC transporte la seconde demande.

9. Appareil de communication (700) selon la revendication 6, dans lequel l'unité de communication (702) est également configurée pour recevoir des secondes informations d'indication provenant de la première station de base, dans lequel les secondes informations d'indication sont utilisées pour indiquer à l'unité de communication de mesurer le signal de référence de positionnement dans un état non connecté RRC.

10. Appareil de communication (700) selon la revendication 6, dans lequel la seconde demande comprend une quantité de mesure à mesurer et un paramètre de configuration de mesure, la quantité de mesure à mesurer comprend au moins l'un d'un angle d'arrivée, d'une différence de temps de signal de référence et d'une différence de temps de transmission de réception, et le paramètre de configuration de mesure comprend au moins l'un d'une périodicité de mesure, d'une quantité de temps de mesure, si un rapport périodique est effectué, d'une périodicité de rapport et d'un identifiant de mesure.

11. Support de stockage lisible par ordinateur, dans lequel le support de stockage lisible par ordinateur stocke un programme informatique ou des instructions ; et lorsque le programme informatique ou les instructions sont exécutés par un processeur, le procédé selon l'une quelconque des revendications 1 à 5 est mis en œuvre.
